# EUROPÄISCHE PATENTSCHRIFT

(11) **EP 0 993 385 B1**
(45) Veröffentlichungstag und Bekanntmachung des Hinweises auf die Patenterteilung: **09.04.2003**
(21) Anmeldenummer: 98941316.6
(22) Anmeldetag: 10.07.1998
(51) Int. Cl.: B60K 1/02, B60K 5/10, B60K 6/02

(54) **ELEKTRISCHE GETRIEBEEINHEIT**
ELECTRICAL DRIVE UNIT
UNITE MOTRICE ELECTRIQUE

(30) Priorität: 10.07.1997 DE 19729378; 17.12.1997 DE 19756083
(43) Veröffentlichungstag der Anmeldung: 19.04.2000
(60) Teilanmeldung: 02022197.4
(73) Patentinhaber: Voith Turbo GmbH & Co. KG, 89522 Heidenheim (DE)
(72) Erfinder: MARTIN, Heinz, D-89518 Heidenheim (DE); DIETZEL, Bernd, D-89428 Syrgenstein (DE); MÜLLER, Robert, D-89407 Dillingen (DE)
(74) Vertreter: Dr. Weitzel & Partner
(86) Internationale Anmeldenummer: EP9804306
(87) Internationale Veröffentlichungsnummer: WO99002358

(56) Entgegenhaltungen:
- EP-A1- 0 249 806
- WO-A1-93/07016
- DE-A- 4 230 529
- DE-A1- 3 619 368
- US-A- 4 593 786

## Beschreibung

Die Erfindung betrifft eine elektrische Getriebeeinheit sowie eine Antriebsanordnung für ein Fahrzeug, insbesondere ein nicht spurgebundenes Fahrzeug mit mindestens einem Verbrennungsmotor, einem Generator und einem Antriebsmotor gemäß dem Oberbegriff von Anspruch 1 bzw. 2. Beispielsweise sei auf das Dokument EP-A-249 806 verwiesen, gemäß dessen der Oberbegriff des Anspruches 1 abgetaßt ist.

Im besonderen bei Straßenfahrzeugen wird heute die Verwendung von Antrieben, bei denen ein Verbrennungsmotor mit einem Generator zur Stromerzeugung verbunden ist und bei denen der Antrieb durch einen Elektromotor bewerkstelligt wird, der vom vorgenannten Generator gespeist wird, diskutiert. Insbesondere soll hier auf die sogenannten dieselelektrischen Antriebe hingewiesen werden.

Ein derartiger Antrieb ist für ein nicht schienengebundenes Fahrzeug beispielsweise aus dem Europäischen Patent EP 0 527 145 B1 bekanntgeworden. Dieses Fahrzeug hat sich insbesondere dadurch ausgezeichnet, daß Verbrennungsmotor und Generator zu einer sogenannten Verbrennungsmotor-Generatorgruppe zusammengefaßt wurden.

Spezielle Antriebskonzepte für Fahrzeuge mit einem Verbrennungsmotor und einem Generator, bei denen als Antriebsmotoren sogenannte Permanent-Magnet-Motoren Verwendung finden, sind aus "Drive systems with permanent magnet synchronous motors, in: Automotive Engineering, Februar 1995, S. 75-81" bekanntgeworden.

Die Verwendung von dieselelektrischen Antrieben insbesondere in Nutzfahrzeugen sind in der Veröffentlichung "Ein elektrischer Einzelradantrieb für City-Busse der Zukunft", B. Wüst, R. Müller, A. Lange in "Der Nahverkehr 6/94, Alba Fachverlag, Düsseldorf, S. 1-7" beschrieben.

Ein Kraftfahrzeug mit auswechselbarem Heckmotormodul zeigt DE-A-4 230 529. Bei sämtlichen aus dem zitierten Stand der Technik bekannten Antriebsanordnungen war der Generator in der Nähe des Verbrennungsmotor angeordnet bzw. direkt an diesen angeflanscht Vom Generator aus mußte eine Vielzahl von Elektroleitungen zur Versorgung der Antriebsmaschinen durch das Fahrzeug gelegt werden. Dies war mit einem erheblichen Fertigungsaufwand verbunden. Ein ganz entscheidender weiterer Nachteil der aus dem Stand der Technik bekannten Konzepte bestand darin, daß ganz erhebliche Umbauarbeiten am Fahrzeugchassis vonnöten waren, um den dieselelektrischen Antrieb anstelle eines konventionellen Antriebes in ein Fahrzeug einbauen zu können.

Aufgabe der Erfindung ist es somit, eine Getriebeeinheit bzw. Antriebsanordnung anzugeben, mit der die obengenannten Nachteile aus dem Stand der Technik vermieden werden können. Insbesondere soll es mit Hilfe der Erfindung möglich werden, ein Fahrzeugchassis, das für einen konventionellen Verbrennungsmotorantrieb Verwendung findet, leicht auf einen dieselelektrischen Antrieb umrüsten zu können. Hierdurch soll erreicht werden, daß auf Kundenwünsche flexibel reagiert werden kann, ohne daß aufwendige Umkonstruktionen am Fahrzeugchassis notwendig sind.

Zur Lösung des obengenannten Problems enthält die Erfindung die Merkmale der unabhängigen Ansprüche 1 bzw. 2.

Die elektrische Getriebeeinheit weist äußere Abmessungen auf die denen eines Automatikgetriebes in Bezug auf die Einbaumaße entspricht. Hierdurch wird ermöglicht, daß bei der Fahrzeugbestellung angegeben werden kann, ob ein konventioneller Antrieb oder ein dieselelektrischer Antrieb gewünscht wird. Je nach dem, welche Wahl vorliegt, kann auf einfache Art und Weise das für den konventionellen Antrieb erforderliche Automatikgetriebe durch elektrische Getriebeeinheit, umfassend mindestens einen Generator und einen Antriebsmotor, ersetzt werden. Ein besonders einfacher Austausch von Automatikgetriebe gegen elektrische Getriebeeinheit wird dadurch erreicht, daß die Getriebeeinheit Befestigungspunkte aufweist und diese Befestigungspunkte derart angeordnet sind, daß die für das Automatikgetriebe vorgesehenen Befestigungsstellen im Fahrzeuggestell bzw. Fahrzeugchassis für die vormontierte elektrische Getriebeeinheit verwendet werden können.

Zur Versorgung der Antriebsmotoren durch die bzw. den Generator der elektrischen Getriebeeinheit werden eine Reihe von elektrischen bzw. elektronischen Komponenten benötigt. Beispielhaft seien hier Steuerungen, Wechselrichter etc. erwähnt. In einer vorteilhaften Ausführungsform der Erfindung werden diese Komponenten von der Getriebeeinheit mit umfaßt Eine derartige Anordnung ist besonders raumsparend.

Zur Drehzahlanpassung von Generator und Verbrennungsmotor kann vorgesehen sein, daß im Rahmen ein dem Generator vorgeschaltetes Getriebe untergebracht ist.

Umfaßt die elektrische Getriebeeinheit mehrere Antriebsmotoren, so wirken diese in einer vorteilhaften Ausführungsform über ein Summiergetriebe, das ebenfalls im Trägerrahmen untergebracht sein kann, auf eine gemeinsame Abtriebswelle. Werden genau zwei Antriebsmotoren vorgesehen, so sind diese in einer bevorzugten Ausführungsform derart angeordnet, daß die Antriebswellen der Räder direkt angetrieben werden können.

In einer einfachen Ausführungsart kann vorgesehen sein, daß die Getriebeeinheit nur einen einzigen Antriebsmotor umfaßt. Die Kraftübertragung auf die Räder erfolgt dann beispielsweise über ein dem Antriebsmotor nachgeschaltetes, ebenfalls von der Getriebeeinheit umfaßtes Getriebe.

Bei Platzproblemen kann mit Vorteil für die Getriebeeinheit vorgesehen sein, den oder die Antriebsmotoren und/oder das abtriebsseitige Getriebe gegenüber dem Generator um einen Winkel versetzt anzuordnen. Insbesondere bei Antriebsanordnungen, die mehr als eine elektrische Getriebeeinheit umfassen, ist eine derartige Lösung vorteilhaft.

In einer ersten Ausführungsform der Erfindung ist vorgesehen, daß die austauschbare Getriebeeinheit einen Trägerrahmen aufweist, in dem die einzelnen Aggregate der Getriebeeinheit, wie beispielsweise Generator oder Antriebsmotor, gelagert werden. Die Befestigungspunkte der Getriebeeinheit zur Aufhängung im Fahrzeugchassis sind dann am Trägerrahmen selbst angeordnet.

In einer altemativen Ausführungsform sind die einzelnen Komponenten selbsttragend miteinander verbunden. Dies ermöglicht eine Gesamtanordnung mit kleineren Abmessungen als bei einer Ausführung mit einem Trägerrahmen.

Neben einem ständigen Antrieb des Generators durch einen Verbrennungsmotor ist auch ein Hybridantrieb denkbar bzw. ein Antrieb, bei dem der elektrische Strom für die Antriebsmotoren aus einem Energiespeicher, beispielsweise einer Batterie, zur Verfügung gestellt wird.

Die Erfindung soll nachfolgend anhand der Figuren beispielhaft beschrieben werden.

Es zeigen:
- Fig. 1: eine Draufsicht auf eine Getriebeeinheit gemäß der Erfindung mit einem Trägerrahmen gemäß einer ersten Ausführungsform der Erfindung;
- Fig. 2: eine Seitenansicht der ersten Ausführungsform der Getriebeeinheit mit Trägerrahmen gemäß Fig. 1;
- Fig. 3: eine Draufsicht auf eine zweite Ausführungsform der Erfindung, wobei die in einem Trägerrahmen gelagerte Getriebeeinheit zwei Fahrmotoren aufweist;
- Fig. 4: eine Draufsicht auf eine weitere Ausführungsform der Erfindung, wobei die Getriebeeinheit in einem Trägerrahmen gelagerte mehrere Fahrmotoren und ein Summiergetriebe umfaßt;
- Fig. 5: eine Draufsicht auf eine Ausführungsform der Erfindung, wobei die in einem Trägerrahmen gelagerte Getriebeeinheit einen Fahrmotor und ein nachgeordnetes Getriebe umfaßt;
- Fig. 6: eine Draufsicht auf eine weitere Ausführungsform der Erfindung, wobei die in einem Trägerrahmen gelagerte Getriebeeinheit einen Generator und einen um 90° hierzu versetzten Fahrmotor umfaßt;
- Fig. 7: eine selbsttragende Getriebeeinheit umfassend einen Antriebsmotor und einen Generator;
- Fig. 8: eine selbsttragende Getriebeeinheit umfassend zwei Fahrmotoren;
- Fig. 9: eine selbsttrageride Getriebeeinheit umfassend mehrere Fahrmotoren und ein Summiergetriebe;
- Fig. 10: eine selbsttragende Getriebeeinheit umfassend ein Fahrmotor und ein nachgeordnetes Getriebe;
- Fig. 11: eine selbsttragende Getriebeeinheit umfassend einen Generator und einen um 90° hierzu versetzten Fahrmotor.

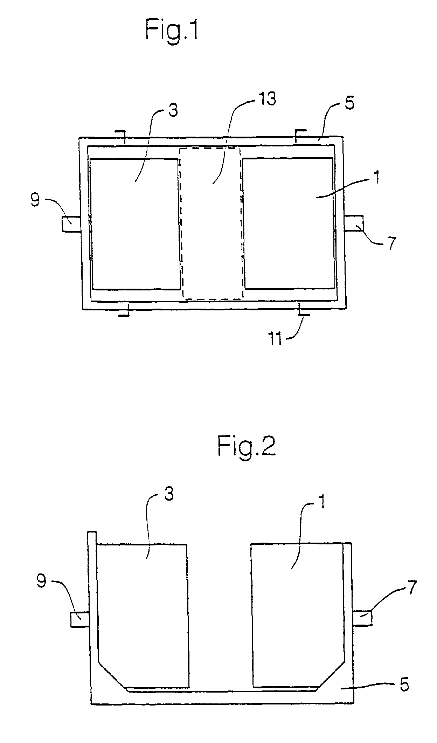

Figur 1 zeigt in einer Draufsicht eine erste Ausführungsform der Erfindung. Die dargestellte elektrische Getriebeeinheit der Antriebsanordnung umfaßt einen Generator 1 sowie einen Antriebsmotor 3. Generator 1 und Antriebsmotor 3 sind gemeinsam in einem Trägerrahmen 5 angeordnet. Die Getriebeeinheit kann radnah im Fahrzeugchassis eingebaut werden. Generator 1 ist über Welle 7 mit dem nicht dargestellten Verbrennungsmotor der Antriebsanordnung gekoppelt Antriebsmotor 3, der vorzugsweise eine sogenannte Transversalflußmaschine ist, wie beispielsweise in "Ein elektrischer Einzelradantrieb für City-Busse der Zukunft", B. Wüst, R. Müller, A. Lange, in "Der Nahverkehr, 6/94, Alba Fachverlag, Düsseldort, S. 1-7" oder DE 37 05 089 beschrieben, ist über Abtriebswelle 9 mit den in der Nähe angeordneten, nicht dargestellten, Antriebsrädern verbunden. Abtriebswelle 9 kann direkt auf die Antriebsräder wirken oder aber über ein Achsgetriebe auf beispielsweise die Hinterräder. Es wäre aber auch möglich, daß Abtriebswelle 9 auf ein in der Radnabe angeordnetes Planetengetriebe wirkt, wie beispielsweise in der DE 195 27 951 offenbart.

Neben einer Speisung des Antriebsmotors 3 durch im Generator 1 erzeugten Strom kann auch vorgesehen sein, den Antriebsmotor aus einem Energiespeicher, beispielsweise einer Batterie, zu speisen. Eine derartige Versorgung der Antriebsmotoren ist beispielsweise aus der Schrift "Drive systems with permanent magnet synchronous motors, Automotive Engineering, Februar 1995, S. 75-79" bekanntgeworden. Der außerhalb der von einem Trägerrahmen 5 umgebenen elektrischen Getriebeeinheit angeordnete Energiespeicher ist in Figur 1 nicht näher dargestellt. Am Trägerrahmen 5 sind Befestigungsmittel, beispielsweise Befestigungspunkte 11, vorgesehen. Diese Befestigungspunkte stimmen mit den Befestigungspunkten eines herkömmlichen Automatikgetriebes im Fahrzeugchassis überein. Es ist dadurch besonders leicht, die im Trägerrahmen 5 zusammengefaßte elektrische Getriebeeinheit gegen ein Automatikgetriebe auszutauschen. Die für ein Automatikgetriebe bereits verwendete Antriebswelle 7 sowie Abtriebswelle 9 muß dadurch lediglich statt mit dem Automatikgetriebe mit der elektrischen Getriebeeinheit verbunden werden.

In einer Fortbildung der Erfindung kann vorgesehen sein, daß in Trägerrahmen 5 auch noch die elektrischen bzw. elektronischen Bauteile, wie beispielsweise Wechselrichter etc. untergebracht sind. Diese können, wie in vorliegendem Ausführungsbeispiel im strichpunktiert angedeuteten Raum 13 zwischen Generator 1 und Antriebsmotor 3 angeordnet sein.

Figur 2 zeigt die Ausführungsform einer elektrischen Getriebeeinheit gemäß Figur 1 in einer Seitenansicht. Besonders gut zu erkennen ist der Trägerrahmen 5, der sowohl Generator 1 wie auch Fahrmotor 3 aufnimmt. Gut zu erkennen auch die Antriebswelle 7, die Verbrennungsmotor und Generator miteinander verbindet sowie die Abtriebswelle 9, die vom Fahrmotor auf die Antriebsräder wirkt. Trägerrahmen 5 ist in vorliegendem Ausführungsbeispiel nach oben offen trogförmig ausgestaltet. Selbstverständlich sind für den Fachmann auch andere Ausführungsformen als die dargestellte eines nach oben offene Träger rahmens 5, denkbar. Beispielsweise könnte der Trägerrahmen auch ganz geschlossen oder segmentweise aus einem Gerippe zusammengesetzt sein.

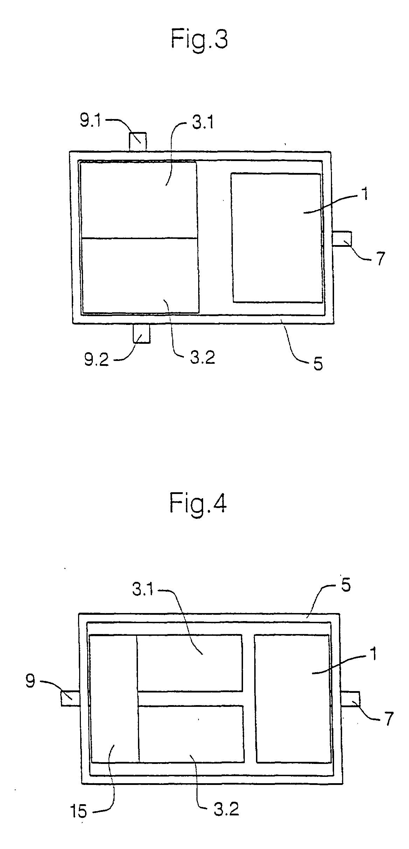

In Figur 3 ist eine weitere Ausführungsform einer elektrischen Getriebeeinheit mit Trägerrahmen in der Draufsicht dargestellt Diese zweite Ausführungsform der Erfindung zeichnet sich dadurch aus, daß die elektrische Getriebeeinheit einen Generator 1 und zwei Fahrmotoren 3.1, 3.2 umfaßt. Jeder der Fahrmotoren 3.1, 3.2 wirkt auf eine Abtriebswelle 9.1, 9.2, die wiederum die Räder antreibt. Die Abtriebswelle ist wie in Figur 1 mit 7 bezeichnet, im übrigen gelten für gleiche Bauteile gleiche Bezugsziffern wie in den Figuren 1 und 2.

Die in Figur 4 dargestellte Ausführungsform umfaßt mehrere Antriebsmotoren. Wiederum sind Generator 1 sowie die Antriebsmotoren 3.1 und 3.2 in einem gemeinsamen Trägerrahmen 5 angeordnet. Generator 1 wird durch Antriebswelle 7 vom Verbrennungsmotor angetrieben. Der elektrische Strom wird zu den Fahrmotoren bzw. Antriebsmotoren 3.1 und 3.2 geführt. Die Antriebsmotoren 3.1 und 3.2 wirken zusammen auf das ebenfalls im Trägerrahmen angeordnete Summiergetriebe 15. Die beiden Antriebsmotoren 3.1 und 3.2 arbeiten somit über Summiergetriebe 15 auf die gemeinsame Abtriebswelle 9, die wiederum mit den Antriebsrädem verbunden ist

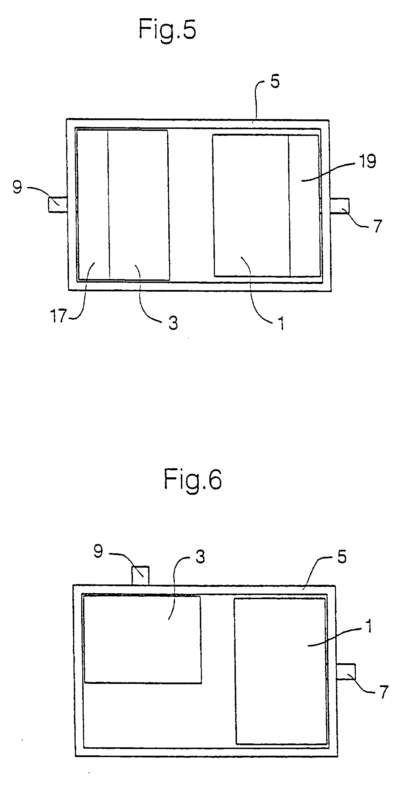

In den Figuren 5 und 6 sind weitere Varianten der Erfindung mit nur einem Antriebsmotor 3 pro erfindungsgemäßer Getriebeeinheit dargestellt. Gemäß Figur 5 ist innerhalb des Trägerrahmens 5 ein Generator 1 sowie Antriebsmotor 3 angeordnet. Dem Antriebsmotor 3 ist Getriebe 17, das auf Antriebswelle 9 wirkt, nachgeordnet. Getriebe 17 ist wie Generator 1 und Antriebsmotor 3 innerhalb des Rahmens 5 untergebracht. Anstelle des Getriebes 17 kann auch ein Drehmomentwandler vorgesehen sein. Dem Generator 1 vorangestellt ist ein weiteres Getriebe 19. Dieses Getriebe 19 kann der Drehzahlanpassung zwischen Getriebe und Antriebsmotor dienen.

Figur 6 zeigt eine Anordnung der Erfindung, bei der aufgrund der Einbauverhältnisse eine um einen beliebigen Winkel versetzte Anordnung zwischen Generator 1 und Antriebsmotor 3 gewählt wurde. Bei der dargestellten Ausführungsform beträgt dieser Winkel 90°. Selbstverständlich ist jedwede andere Anordnung denkbar, je nach dem, welche Einbauverhältnisse vorliegen. Insbesondere eignet sich die 90°-Anordnung für Fahrzeuge mit quer eingebautem Verbrennungsmotor, die bei konventionellem Getriebe einen Winkeltrieb zwischen Getriebe und Achse benötigen würde. Selbstverständlich ist es auch möglich, daß an- bzw. abtriebsseitige Getriebe gegenüber dem Generator bzw. dem Antriebsmotor um eine ebenso beliebigen Winkel zu versetzen. Beim Einbau in ein Fahrzeug könnten zwei derartige Getriebeeinheiten nebeneinander angeordnet sein, wobei jede einzelne erfindungsgemäße Getriebeeinheit in einem eigenen Trägerrahmen angeordnet ist.

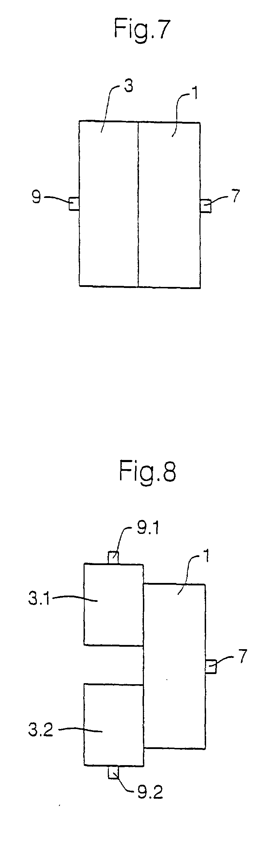

Die Figuren 7 bis 11 zeigen, wie schon die Ausführungsformen gemäß den Figuren 1 bis 6, eine Vielzahl von unterschiedlichen Anordnungen der einzelnen Komponenten der Getriebeeinheit bei einer selbsttragenden Konstruktion. Gleiche Komponenten wie in den Figuren 1 bis 6 werden auch in den Figuren 7 bis 11 mit denselben Bezugszeichen belegt.

Figur 7 zeigt eine erste Ausführungsform der selbsttragenden Konstruktion. Die dargestellte elektrische Getriebeeinheit der Antriebsanordnung umfaßt einen Generator 1 sowie einen Antriebsmotor 3. Generator 1 und Antriebsmotor 3 sind selbsttragend miteinander verbunden. Die Getriebeeinheit kann radnah im Fahrzeugchassis eingebaut werden.

Generator 1 ist über Welle 7 mit dem nicht dargestellten Verbrennungsmotor der Antriebsanordnung gekoppelt. Antriebsmotor 3, der vorzugsweise eine sogenannte Transversalflußmashcine ist, ist über Abtriebswelle 9 mit den in der Nähe angeordneten, nicht dargestellten, Antriebsrädern verbunden. Abtriebswelle 9 kann direkt auf die Antriebsräder wirken oder aber über ein Achsgetriebe auf beispielsweise die Hinterräder. Es wäre aber auch möglich, daß Abtriebswelle 9 auf ein in der Radnabe angeordnetes Planetengetriebe wirkt.

Neben einer Speisung des Antriebsmotors 3 durch im Generator 1 erzeugten Strom kann auch vorgesehen sein, den Antriebsmotor aus einem Energiespeicher, beispielsweise einer Batterie, zu versorgen. Der Energiespeicher ist in Figur 7 nicht näher dargestellt. Die selbsttragende Konstruktion umfaßt Befestigungsmittel. Diese Befestigungspunkte der Befestigungsmittel sind wie schon bei der Konstruktion mit Trägerrahmen derart angeordnet, daß sie mit den Befestigungspunkten eines herkömmlichen Automatikgetriebes im Fahrzeugchassis übereinstimmen. Es ist dadurch besonders leicht, die elektrische Getriebeeinheit gegen ein Automatikgetriebe auszutauschen. Die für ein Automatikgetriebe bereits verwendete Antriebswelle 7 sowie Abtriebswelle 9 muß dann lediglich statt mit dem Automatikgetriebe mit der elektrischen Getriebeeinheit verbunden werden.

In einer Fortbildung der Erfindung kann vorgesehen sein, daß in die elektrischen bzw. elektronischen Bauteile, wie beispielsweise Wechselrichter etc., in der Nähe der Befestigungspunkte angeordnet sind.

Figur 8 zeigt eine zweite Ausführungsform einer selbsttragenden elektrischen Getriebeeinheit in der Draufsicht dargestellt. Diese Ausführungsform zeichnet sich dadurch aus, daß die elektrische Getriebeeinheit einen Generator 1 und zwei Fahrmotoren 3.1, 3.2 umfaßt. Jeder der Fahrmotoren 3.1, 3.2 wirkt auf eine Abtriebswelle 9.1, 9.2, die wiederum die Räder antriebt. Die Abtriebswelle ist wie in Figur 7 mit 7 bezeichnet, im übrigen gelten für gleiche Bauteile gleiche Bezugsziffem wie in den Figuren 1 bis 7.

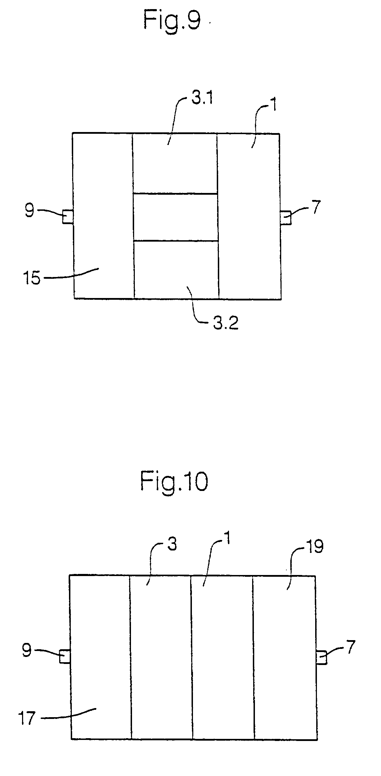

In Figur 9 ist eine weitere Ausführungsform einer selbsttragenden elektrischen Getriebeeinheit mit mehreren Antriebsmotoren gezeigt. Generator 1 wird durch Antriebswelle 7 vom Verbrennungsmotor angetrieben. Der elektrische Strom wird zu den Fahrmotoren bzw. Antriebsmotoren 3.1 und 3.2 geführt. Die Antriebsmotoren 3.1 und 3.2 wirken zusammen auf ein Summiergetriebe 15. Die beiden Antriebsmotoren 3.1 und 3.2 arbeiten somit über Summiergetriebe 15 auf die gemeinsame Abtriebswelle 9, die wiederum mit den Antriebsrädern verbunden ist.

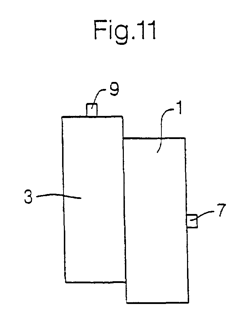

In den Figuren 10 und 11 sind weitere Varianten der selbsttragenden Ausführungsform mit nur einem Antriebsmotor 3 pro erfindungsgemäßer Getriebeeinheit dargestellt. Gemäß Figur 10 umfaßt die selbsttragende Ausführungsform einen Generator 1 sowie Antriebsmotor 3. Dem Antriebsmotor 3 ist Getriebe 17, das auf Antriebswelle 9 wirkt, nachgeordnet. Anstelle des Getriebes 17 kann auch ein Drehmomentwandler vorgesehen sein. Dem Generator 1 vorangestellt ist ein weiteres Getriebe 19. Dieses Getriebe 19 kann der Drehzahlanpassung zwischen Getriebe und Antriebsmotor dienen.

Figur 11 zeigt eine Anordnung der Erfindung, bei der aufgrund der Einbauverhältnisse eine um einen beliebigen Winkel versetzte Anordnung zwischen Generator 1 und Antriebsmotor 3 gewählt wurde. Bei der dargestellten Ausführungsform beträgt dieser Winkel 90°. Selbstverständlich ist jedwede andere Anordnung denkbar, je nach dem, welche Einbauverhältnisse vorliegen. Insbesondere eignet sich die 90°-Anordnung für Fahrzeuge mit quer eingebautem Verbrennungsmotor, die bei konventionellem Getriebe einen Winkeltrieb zwischen Getriebe und Achse benötigen würde. Selbstverständlich ist es auch möglich, daß an- bzw. abtriebsseitige Getriebe gegenüber dem Generator bzw. dem Antriebsmotor um eine ebenso beliebigen Winkel zu versetzen. Beim Einbau in ein Fahrzeug könnten zwei derartige Getriebeeinheiten nebeneinander angeordnet sein, wobei jede einzelne erfindungsgemäße Getriebeeinheit in einem eigenen Trägerrahmen angeordnet ist.

Mit vorliegender Erfindung wird somit erstmals eine elektrische Getriebeeinheit vorgestellt, die auf leichte Art und Weise den Austausch mit einem konventionellen Automatikgetriebe erlaubt. Als weitere Vorteile der elektrischen Getriebeeinheit ist die Möglichkeit der Vormontage zu erwähnen. Aufgrund der Vormontage vereinfacht sich der logische Aufwand für den Anwender, beispielsweise den Nutzfahrzeugbauer, erheblich. In einer noch vorteilhafteren Ausführungsform kann vorgesehen sein, daß die Kühlwasserleitungen ebenfalls vormontiert werden, so daß sich der Aufwand hierfür gegenüber herkömmlichen Anordnungen erheblich vereinfacht.

## Patentansprüche

1. Elektrische Getriebeeinheit zur Montage in einem Fahrzeug mit mindestens einem Verbrennungsmotor, umfassend mindestens einen Antriebsmotor (3) und mindestens einen Generator (1), wobei die elektrische Getriebeeinheit austauschbar im Chassis eines Kraftfahrzeuges angeordnet ist,
**dadurch gekennzeichnet, daß** die Getriebeeinheit selbsttragend mit Befestigungspunkten (11) ausgebildet ist oder einen Trägerrahmen mit Befestigungspunkten (11) umfaßt und daß die Getriebeeinheit äußere Abmessungen aufweist, die denen eines Automatikgetriebes bezüglich der Einbaumaße entsprechen, wobei die Befestigungspunkte (11) derart angeordnet sind, daß die für ein Getriebe vorgesehenen Befestigungsstellen in einem Fahrzeuggestell für die elektrische Getriebeeinheit verwendet werden können.

2. Antriebsanordnung für ein Fahrzeug mit
2.1 mindestens einem Verbrennungsmotor,
2.2 mindestens einem Generator (1);
2.3 mindestens einem Antriebsmotor (3), wobei
2.4 mindestens ein Generator und mindestens ein Antriebsmotor mindestens zu einer austauschbaren elektrischen Getriebeeinheit zusammengefaßt sind,
**dadurch gekennzeichnet, daß**
2.5 die elektrische Getriebeeinheit selbsttragend mit Befestigungspunkten (11) ausgebildet ist oder einen Trägerrahmen mit Befestigungspunkten (11) umfaßt und die elektrische Getriebeeinheit Abmessungen aufweist, die denen eines Automatikgetriebes bezüglich der Einbaumaße entsprechen und daß
2.6 die Getriebeeinheit räumlich in der Nähe der anzutreibenden Achse und/oder Räder angeordnet ist, wobei
2.7 die Befestigungspunkte (11) derart angeordnet sind, daß die für ein Getriebe vorgesehenen Befestigungsstellen in einem Fahrzeuggestell für die elektrische Getriebeeinheit verwendet werden können.

3. Antriebsanordnung nach Anspruch 2, **dadurch gekennzeichnet, daß** die elektrischen beziehungsweise elektronischen Komponenten für die Getriebeeinheit von der Getriebeeinheit umfaßt werden.

4. Antriebsanordnung nach Anspruch 3, **dadurch gekennzeichnet, daß** die elektrischen beziehungsweise elektronischen Komponenten für die Getriebeeinheit an den Befestigungspunkten angeordnet sind.

5. Antriebsanordnung nach einem der Ansprüche 2 bis 4, **dadurch gekennzeichnet, daß** die Getriebeeinheit ein dem Generator (1) vorgeschaltetes Getriebe zur Drehzahlanpassung von Generator (1) und Verbrennungsmotor umfaßt.

6. Antriebsordnung nach einem der Ansprüche 2 bis 5, **dadurch gekennzeichnet, daß** die Getriebeeinheit mehrere Antriebsmotoren umfaßt.

7. Antriebsanordnung nach Anspruch 6, **dadurch gekennzeichnet, daß** mehrere Antriebsmotoren über ein Summiergetriebe auf eine gemeinsame Abtriebswelle arbeiten.

8. Antriebsanordnung gemäß Anspruch 6, **dadurch gekennzeichnet, daß** die elektrische Getriebeeinheit zwei Antriebsmotoren (3.1, 3.2) umfaßt, die derart angeordnet sind, daß über die Abtriebswellen (9.1, 9.2) die Räder/Achsen angetrieben werden können.

9. Getriebeeinheit nach Anspruch 1 bzw. Antriebsanordnung nach einem der Ansprüche 2 bis 5, **dadurch gekennzeichnet, daß** dem Antriebsmotor ein Getriebe (15) nachgeschaltet ist.

10. Getriebeeinheit nach Anspruch 1 bzw. Antriebsanordnung nach einem der Ansprüche 2 bis 9, **dadurch gekennzeichnet, daß** der oder die Antriebsmotor(en) und/oder das abtriebsseitige Getriebe gegenüber dem Generator um einen Winkel versetzt angeordnet ist.

11. Getriebeeinheit nach Anspruch 1 bzw. Antriebsanordnung nach einem der Ansprüche 2 bis 10, **dadurch gekennzeichnet, daß** die Antriebsanordnung des weiteren einen Energiespeicher zur Versorgung der Antriebsmotoren umfaßt.

## Claims

1. An electric transmission unit for mounting in a vehicle with at least one internal combustion engine, comprising at least one driving motor (3) and at least one generator (1), with the electric transmission unit being disposed exchangeably in the chassis of a motor vehicle, **characterized in that** the transmission unit is arranged so as to be self-supporting with fastening points (11) or comprises a supporting frame with fastening points (11) and that the transmission unit has outside dimensions which correspond to an automatic transmission concerning the installation dimensions, with the fastening points (11) being arranged in such a way that the fastening points provided for a transmission can be used in a vehicle chassis for the electric transmission unit.

2. A drive arrangement for a vehicle, with
2.1 at least one internal combustion engine;
2.2 at least one generator (1);
2.3 at least one driving motor (3), with
2.4 at least one generator and at least one driving motor are combined at least into an exchangeable electric transmission unit, **characterized in that**
2.5 the electric transmission unit is arranged so as to be self-supporting with fastening points (11) or comprises a supporting frame with fastening points (11) and the electric transmission unit has dimensions which correspond to those of an automatic transmission concerning the installation dimensions, and
2.6 that the transmission unit is spatially arranged close to the axle and/or wheels to be driven, with
2.7 the fastening points (11) being arranged in such a way that the fastening points provided for a transmission can be used in a vehicle chassis for the electric transmission unit.

3. A drive arrangement as claimed in claim 2, **characterized in that** the electric or electronic components for the transmission unit are comprised by the transmission unit.

4. A drive arrangement as claimed in claim 3, **characterized in that** the electric or electronic components for the transmission unit are arranged on the fastening points.

5. A drive arrangement as claimed in one of the claims 2 to 4, **characterized in that** the transmission unit comprises a gear upstream of the generator (1) for the speed adjustment of the generator (1) and the internal combustion engine.

6. A drive arrangement as claimed in one of the claims 2 to 5, **characterized in that** the transmission unit comprises several driving motors.

7. A drive arrangement as claimed in claim 6, **characterized in that** several driving motors work via a summation gear on a common driven shaft.

8. A drive arrangement as claimed in claim 6, **characterized in that** the electric transmission unit comprises two drive motors (3.1, 3.2) which are arranged in such a way that the wheels/axles can be driven via the driven shafts (9.1., 9.2).

9. A transmission unit as claimed in claim 1 or a drive arrangement as claimed in claim 2 to 5, **characterized in that** a gear (15) is connected downstream of the driving motor.

10. A transmission unit as claimed in claim 1 or a drive arrangement as claimed in claim 2 to 9, **characterized in that** the driving motor(s) and/or the gear on the driven side are arranged offset by an angle relative to the generator.

11. A transmission unit as claimed in claim 1 or a drive arrangement as claimed in claim 2 to 10, **characterized in that** the drive arrangement further comprises an energy storage means for supplying the driving motors.

## Revendications

1. Boîte de vitesses électrique destinée à être montée dans un véhicule automobile avec au moins un moteur à combustion interne comportant au moins un moteur d'entraînement (3) et au moins un générateur (1), la boîte de vitesses électrique étant montée remplaçable dans le châssis d'un véhicule automobile,
**caractérisée en ce que** la boîte de vitesses est réalisée autoportante et pourvue de points de fixation (11) ou comporte un cadre porteur avec des points de fixation (11) et que, du point du vue de l'encombrement, les dimensions extérieures de la boîte de vitesses correspondent à celles d'une boîte automatique, les points de fixation (11) étant disposés de telle manière que les endroits prévus pour la fixation d'une boîte de vitesses dans un châssis peuvent être utilisés pour la boîte de vitesses électrique.

2. Groupe d'entraînement pour un véhicule automobile avec
2.1 au moins un moteur à combustion interne ;
2.2 au moins un générateur (1) ;
2.3 au moins un moteur d'entraînement (3),
2.4 au moins un générateur et au moins un moteur d'entraînement étant regroupés dans au moins une boîte de vitesses électrique remplaçable,
**caractérisé en ce que**
2.5 la boîte de vitesses électrique est réalisée autoportante et pourvue de points de fixation (11) ou comporte un cadre porteur avec des points de fixation (11) et **en ce que**, du point du vue de l'encombrement, les dimensions extérieures de la boîte de vitesses électrique correspondent à celles d'une boîte automatique et que
2.6 la boîte de vitesses est disposée à proximité de l'axe et/ou des roues destinés à être entraînés,
2.7 les points de fixation (11) étant disposés de telle manière que les endroits prévus pour la fixation d'une boîte de vitesses dans un châssis peuvent être utilisés pour la boîte de vitesses électrique.

3. Groupe d'entraînement selon la revendication 2, **caractérisé en ce que** les composants électriques ou électroniques de la boîte de vitesses sont compris dans la boîte de vitesses.

4. Groupe d'entraînement selon la revendication 3, **caractérisé en ce que** les composants électriques ou électroniques de la boîte de vitesses sont installés aux points de fixation.

5. Groupe d'entraînement selon l'une quelconque des revendications 2 à 4, **caractérisé en ce que** la boîte de vitesses comporte un engrenage monté en amont du générateur (1) et destiné à adapter la vitesse du générateur (1) à celle du moteur à combustion inteme.

6. Groupe d'entraînement selon l'une quelconque des revendications 2 à 5, **caractérisé en ce que** la boîte de vitesses comporte plusieurs moteurs d'entraînement.

7. Groupe d'entraînement selon la revendication 6, **caractérisé en ce que** plusieurs moteurs d'entraînement tournent sur un arbre entraîné commun par l'intermédiaire d'une boîte cumulative.

8. Groupe d'entraînement selon la revendication 6, **caractérisé en ce que** la boîte de vitesses électrique comporte deux moteurs d'entraînement (3.1, 3.2) disposés de telle sorte que les roues/axes peuvent être entraînés par les arbres entraînés (9.1, 9.2).

9. Boîte de vitesses selon la revendication 1, voire groupe d'entraînement selon l'une quelconque des revendications 2 à 5, **caractérisés en ce qu'**un engrenage (15) est monté en aval du moteur d'entraînement.

10. Boîte de vitesses selon la revendication 1, voire groupe d'entraînement selon l'une quelconque des revendications 2 à 9, **caractérisés en ce que** le ou les moteur(s) d'entraînement et/ou l'engrenage situé du côté de l'arbre entraîné est/sont décalé(s) angulairement par rapport au générateur.

11. Boîte de vitesses selon la revendication 1, voire groupe d'entraînement selon l'une quelconque des revendications 2 à 10, **caractérisés en ce que** le groupe d'entraînement comporte par ailleurs un accumulateur d'énergie destiné à alimenter les moteurs d'entraînement.
